# EUROPÄISCHE PATENTSCHRIFT

(11) **EP 4 225 567 B1**
(45) Veröffentlichungstag und Bekanntmachung des Hinweises auf die Patenterteilung: **19.03.2025**
(21) Anmeldenummer: 21799177.7
(22) Anmeldetag: 04.10.2021
(51) Int. Cl.: B29D 30/06

(54) **HEIZPRESSE UND VERFAHREN ZUR VULKANISATION EINES FAHRZEUGREIFENS IN DIESER HEIZPRESSE UNTER VAKUUM**
HEATING PRESS AND METHOD FOR VULCANIZING A VEHICLE TIRE IN SAID HEATING PRESS UNDER VACUUM
PRESSE CHAUFFANTE ET PROCÉDÉ DE VULCANISATION D'UN PNEU DE VÉHICULE DANS LADITE PRESSE CHAUFFANTE SOUS VIDE

(30) Priorität: 05.10.2020 DE 102020212550
(43) Veröffentlichungstag der Anmeldung: 16.08.2023
(73) Patentinhaber: Continental Reifen Deutschland GmbH, 30175 Hannover (DE)
(72) Erfinder: WENZEL, Karsten, 30419 Hannover (DE); WEDEKIND, Horst, 30419 Hannover (DE); RAMM, Michael, 30419 Hannover (DE)
(74) Vertreter: Continental Corporation
(86) Internationale Anmeldenummer: PCT/DE2021/200143
(87) Internationale Veröffentlichungsnummer: WO 2022/073568

(56) Entgegenhaltungen:
- DE-A1- 1 779 130
- US-A- 3 550 196
- US-A- 5 145 688

## Beschreibung

Die Erfindung betrifft eine Heizpresse zum Vulkanisieren eines Fahrzeugreifens mit einem Heizpressen-Oberteil und einem Heizpressen-Unterteil, wobei das Heizpressen-Oberteil ein an dieses montiertes Hauben-Oberteil und in diesem Hauben-Oberteil ein Formteil einer Vulkanisierform enthaltenden Container aufweist,
wobei das Heizpressen-Oberteil und das Heizpressen-Unterteil mit dem Container derart in Verbindung stehen, so dass beim Herunterfahren des Heizpressen-Oberteils über einen in axialer Richtung erfolgenden Gesamthub, bei dem das offene Ende des Hauben-Oberteils auf das Heizpressen-Unterteil fährt, die Formteile der Vulkanisierform in radialer Richtung schließbar sind.

Die Erfindung betrifft ferner ein Verfahren zur Vulkanisation eines Rohreifens in dieser vorgenannten Heizpresse.

Die vorbeschriebene Heizpresse ist eine Standard-Heizpresse zum Vulkanisieren von Fahrzeugreifen unter atmosphärischen Bedingungen.

Eine derartige Vulkanisierpresse ist aus der Patentanmeldung DE 17 79 130 A1 bekannt. Hierbei ist das Heizpressen-Oberteil eine Kuppel bestehend aus einem zylindrischen Glied als Hauben-Oberteil und einer oberen Pressenplatte. Bei der Presse kann der Innenraum der Formteile vor ihrem Verschließen unter Vakuum gestellt werden, wobei die Form dann von einer Kammer umgeben ist, die gegenüber der umgebenden Atmosphäre abgedichtet ist.

Die Heizpresse umfasst einen sogenannten Container, welcher die eigentliche segmentierte Vulkanisierform mit den dem Reifen formgebenden Formsegmenten und Seitenwandschalen sowie Wulstringen umfasst. Zudem sind Heizkammern zum Temperieren der formgebenden Teile angeordnet. Der Container ist während der Vulkanisation von einer geschlossenen Haube umgeben, welche im Stand der Technik primär zur Temperaturisolation während der Vulkanisation dient.

Um Fehlstellen an der Reifenoberfläche möglichst zu vermeiden, muss die Luft zwischen der Oberfläche des Rohreifens und der Oberfläche der Formflächen entfernt werden. Hierzu ist es generell bekannt, dass 1000 bis 5000 Entlüftungsventile in den Formflächen der Formteile vorzusehen sind. Durch diese Entlüftungsventile wird die Luft aus dem Formenhohlraum nach radial und axial außen durch Entlüftungskanäle abgeführt. Jedoch müssen die Formteile einer neuen Vulkanisierform mit diesen Ventilen bestückt werden. Weiterhin neigen diese Ventile durch eindringendes Gummi von dem zu vulkanisierenden Reifen zum Verdrecken, so dass diese aufwändig ausgetauscht oder gereinigt werden müssen.

Der Erfindung liegt die Aufgabe zugrunde, eine Heizpresse zum Vulkanisieren eines Fahrzeugreifens unter Vakuum bereitzustellen, mit welcher zuverlässig Fahrzeugreifen unter Verzicht auf Entlüftungsventile in der Vulkanisierform vulkanisiert werden kann. Es ist ebenfalls die Aufgabe der Erfindung, ein Verfahren zum zeiteffizienten Vulkanisieren eines Fahrzeugreifens zur Verfügung zu stellen.

Die Aufgabe wird in Bezug auf die Heizpresse gelöst, indem
- das Hauben-Oberteil einen fest an das Heizpressen-Oberteil angeordneten ersten Kreisring und einen an diesen ersten Kreisring in axialer Richtung anschließenden und in axialer Richtung P1 über den ersten Kreisring außen verschiebbaren zweiten Kreisring aufweist
- vakuumdichte Dichtungen zwischen den beiden Kreisringen sowie dem zweiten Kreisring und dem Heizpressen-Unterteil angeordnet sind,
- der Gesamthub (GH) aus einem ersten Teilhub (TH₁) und einem zweiten Teilhub (TH2) fahrbar ist,
- nach dem ersten Teilhub das Hauben-Oberteil derart verfahrbar ist, dass dieses mit dem zweiten Kreisring auf dem Heizpressen-Unterteil aufsitzt und der Innenraum des Hauben-Oberteils durch die Dichtungen vakuumdicht geschlossen ist, während die Vulkanisierform jedoch noch luftdurchlässig geöffnet ist und
- zur Erzeugbarkeit eines Vakuums im Innenraum der Haube vor dem vollständigen Schließen der Vulkanisierform eine Pumpe und ein Vakuumtank angeordnet sind, mittels derer im Innenraum der Haube nach dem ersten Teilhub ein Vakuum erzeugbar ist, wobei der Vakuumtank und die Pumpe mit dem Innenraum der Haube in Verbindung stehen und wobei der Vakuumtank und die Pumpe miteinander in Verbindung stehen und
- nach dem zweiten Teilhub das Hauben-Oberteil derart verfahrbar ist, dass der zweite Kreisring weiter gegenüber dem ersten Kreisring außen verschiebbar ist und die Vulkanisierform unter Vakuumbedingungen im Innenraum der Haube luftdicht schließbar ist.

Das Vakuum, welches nach dem ersten Teilhub erhaltbar ist, dient dazu, die Luft aus der noch nicht vollständig geschlossenen Vulkanisierform, insbesondere zwischen der äußeren Oberfläche des Reifens und den Formflächen der formenden Teile der Vulkanisierform zu entfernen, um nach dem zweiten Teilhub, durch welchen die Vulkanisierform vollständig schließbar ist, den zu vulkanisierenden Reifen hochqualitativ und ohne Fehlstellen fertigen zu können.

Der Begriff "Kreisring" hat die Bedeutung von "Zylinder mit etwa kreisringförmigem Querschnitt".

Wesentlich ist weiterhin, dass die Vulkanisierform selber keine Entlüftungsmittel zur Entlüftung des Formenhohlraumes aufweist. Durch die Vulkanisation unter Vakuum wird auf die im Stand der Technik in der Vulkanisierform angeordneten 1000 bis 5000 Entlüftungsventile verzichtet, durch welche die Luft aus dem Formenhohlraum nach radial außen abgeleitet wird. Hierdurch ist eine Nachbearbeitung der durch die Entlüftungsmittel erhaltenen Gummiaustriebe am Reifen nicht mehr notwendig und ein Austausch bzw. die Reinigung nicht mehr funktionsfähiger Entlüftungsventile entfällt. Dieses ist zeit- und kostengünstig. Zudem erhält der vulkanisierte Reifen durch die Vulkanisation unter Vakuum eine äußere Form, welche absolut frei von Fehlstellen ist und dadurch perfekt anmutet.

Weiterhin ist erfindungswesentlich, dass das Hauben-Oberteil zwei Kreisringe aufweist, von denen der erste Kreisring fest am Heizpressen-Oberteil angeordnet ist und der zweite Kreisring teleskopartig über den ersten Kreisring außen verschiebbar ist. Hierdurch ist erreicht, dass - bei ausgefahrenen beiden Kreisringen des Hauben-Oberteiles und Senken der Haube auf das Heizpressen-Unterteil - mittels der angeordneten Dichtungen ein vakuumdichter Innenraum der Haube um den Container erhaltbar ist, wobei die Vulkanisierform jedoch noch nicht vollständig geschlossen ist. An dem Container oder der Vulkanisierform selber sollen ausdrücklich keine Veränderungen hinsichtlich vakuumdichtender Maßnahmen vorgenommen sein.

Der Begriff Vakuum meint Luftdruck im Bereich von 950mbar (abs) bis 0,1mbar (abs). Die Ringdichtung weist vorzugsweise einen runden, eckigen oder flachen Querschnitt auf.

Zweckmäßig ist es, wenn ein hydraulischer, pneumatischer oder elektrischer Aktuator angeordnet ist, durch den der zweite Kreisring des Hauben-Oberteiles in axialer Richtung verfahrbar ist.

Bevorzugt ist an dem Heizpressen-Unterteil der Heizpresse ein Hauben-Unterteil in Form eines dritten Kreisringes angeordnet. Es gibt dann je nach dem Größenverhältnis des Durchmessers des zweiten Kreisrings des Hauben-Oberteils zum Durchmesser des dritten Kreisrings des Hauben-Unterteils eine unterschiedliche Anordnung des Dichtrings zwischen dem zweiten Kreisring des Hauben-Oberteils und dem dritten Kreisring des Hauben-Unterteils.

Ist der Durchmesser des zweiten Kreisrings des Hauben-Oberteils leicht größer als der Durchmesser des dritten Kreisrings des Hauben-Unterteils, so weist entweder der dritte Kreisring eine an seiner Außenseite eine umlaufende vakuumdichte Dichtung auf oder der zweite Kreisring eine an seiner Innenseite eine umlaufende vakuumdichte Dichtung auf. Die Dichtung dichtet den kleinen Zwischenraum zwischen dem zweiten Kreisring des Haubenoberteils und dem dritten Kreisring des Hauben-Unterteils ab, wenn der zweite Kreisring auf dem Hauben-Unterteil aufsitzt. Dies ist der Fall, wenn zumindest der erste Teilhub (TH₁) des Gesamthubs (GH) durch die Heizpresse verfahren wurde.

Ist der Durchmesser des zweiten Kreisrings des Hauben-Oberteils genau so groß wie der Durchmesser des dritten Kreisrings des Hauben-Unterteils, so weist entweder der dritte Kreisring eine an seinem oberen Ende eine umlaufende vakuumdichte Dichtung auf oder der zweite Kreisring eine an seinem unteren Ende eine umlaufende vakuumdichte Dichtung auf. Die Dichtung dichtet dann in dem Fall, dass der zweite Kreisring auf dem dritten Kreisring des Hauben-Unterteils aufsitzt. Dies ist der Fall, wenn zumindest der erste Teilhub (TH₁) des Gesamthubs (GH) durch die Heizpresse verfahren wurde.

Ist der Durchmesser des zweiten Kreisrings des Hauben-Oberteils leicht kleiner als der Durchmesser des dritten Kreisrings des Hauben-Unterteils, so weist entweder der dritte Kreisring eine an seiner Innenseite eine umlaufende vakuumdichte Dichtung auf oder der zweite Kreisring eine an seiner Außenseite eine umlaufende vakuumdichte Dichtung auf. Die Dichtung dichtet den kleinen Zwischenraum zwischen dem zweiten Kreisring des Haubenoberteils und dem dritten Kreisring des Hauben-Unterteils ab, wenn der zweite Kreisring auf dem Hauben-Unterteil aufsitzt. Dies ist der Fall, wenn zumindest der erste Teilhub (TH₁) des Gesamthubs (GH) durch die Heizpresse verfahren wurde.

In einer bestimmten Ausführung der Erfindung ist an dem Heizpressen-Unterteil ein Hauben-Unterteil in Form eines dritten Kreisringes angeordnet, wobei der erste Kreisring des Hauben-Oberteiles und der dritte Kreisring des Hauben-Unterteiles den gleichen Innendurchmesser und den gleichen Außendurchmesser aufweisen und miteinander fluchtend in der Heizpresse angeordnet sind. Hierdurch ist eine sehr zuverlässige Dichtung des Haubeninnenraumes erhalten, insbesondere wenn auf dem oberen Ende des dritten Kreisrings oder an dem unteren Ende des ersten Kreisrings noch ein Dichtring angeordnet ist.

In dieser Ausführung weist dann bevorzugt der dritte Kreisring noch eine an seiner Außenseite umlaufende vakuumdichte Dichtung auf, die zwischen dem zweiten Kreisring des Hauben-Oberteils und dem dritten Kreisring des Hauben-Unterteils abdichtet, wenn der zweite Kreisring auf dem Hauben-Unterteil aufsitzt. Dies ist der Fall, wenn zumindest der erste Teilhub (TH₁) des Gesamthubs (GH) durch die Heizpresse verfahren wurde.

Zweckmäßig ist es, wenn die Dichtungen Ringdichtungen sind und zumindest eine Ringdichtung im unteren Bereich des Hauben-Oberteils und zumindest eine weitere die Ringdichtung im oberen Bereich des Hauben-Unterteils angeordnet sind. Das Vakuum wird erzeugt, in dem man sicherstellt, dass der erste und zweite Kreisring des Hauben-Oberteils sowie der dritte Kreisring des Hauben-Unterteils durch jeweils mindestens eine Ringdichtung gegeneinander abgedichtet werden.

Zweckmäßig ist es für eine zuverlässige Dichtleistung, wenn die Ringdichtungen in ringförmigen Nuten angeordnet sind, wobei der Durchmesser der Ringdichtungen geringfügig größer als die Tiefe der Nuten sind. Geringfügig größer meint, dass die Dichtung beim Einbau in die Nut und im dichtenden Zustand maximal 40% komprimiert wird im Vergleich zur kompressionsfreien Geometrie der Dichtung. Durch die genaue Auslegung der Nut im Verhältnis zur Dichtungsgeometrie wird einer Beschädigung der Dichtung(en) durch (Relativ-)Bewegungen der zwei bzw. drei Kreisringen vorgebeugt und die Haltbarkeit verbessert.

In einer Ausführung der Erfindung bestehen die Ringdichtung aus Vollmaterial. Das Vollmaterial kann aus einem oder mehreren für Dichtungen bekannten Materialien wie zum Beispiel FKM oder FFKM bestehen. Diese Dichtungen sind kostengünstig und einfach handzuhaben.

In einer anderen Ausführung der Erfindung sind die Ringdichtungen in ihrem Durchmesser veränderbare Schläuche. Dieses hat den Vorteil, dass die Ringdichtung geringer auf Relativbewegungen zwischen Kreisringen der Haube belastet wird und erst dann in seinem Durchmesser vergrößert wird, wenn die Dichtwirkung erforderlich ist.

Vorteilhaft ist es, wenn die Ringdichtungen differentiell gepumpte Doppelringdichtungen sind. Dieses hat den Vorteil, dass etwaige Leckagen mit geringen Pumpleistungen kompensiert werden können.

Die vakuumdichte Abdichtung kann zwischen dem ersten Kreisring und dem zweite Kreisring des Hauben-Oberteils auch mittels einer elastisch dehnbaren, vakuumdichten Gummimanschette erfolgen. Diese ist im unteren Teil der beiden Kreisringe innen jeweils kreisförmig befestigt.

Um eine mechanische Abstützung der Haubenteile bzw. der Kreisringe gegeneinander zu verbessern, ist es zweckmäßig, wenn im Bereich oberhalb und/oder unterhalb der Ringdichtungen Gleitbänder aus abriebfesten Hochtemperatur-Polymer, wie zum Beispiel aus PEEK, in den Haubenteilen bzw. an den Kreisringen angeordnet sind.

Zweckmäßig ist es, wenn der Vakuumtank ein Volumen aufweist, welches etwa 5 bis 10mal größer als das Volumen der geschlossenen Haube (inklusive Form, Container, Reifenrohling, Heizbalg) ist. Hierdurch ist sichergestellt, dass in der Haube zuverlässig ein Vakuum erzeugbar ist. Zudem ist die erforderliche Zeit für das Erzeugen des notwendigen Vakuums signifikant reduziert. Dieses kann im Rahmen des normalen Be und Entladeprozeßes stattfinden.

In Bezug auf das Verfahren mit einer vorgenannten Heizpresse wird die Erfindung dadurch gelöst, dass man folgende Schritte nacheinander ausführt:
a) Beladen der geöffneten Heizpresse durch Einlegen des zu vulkanisierenden Rohreifens in den Container, wobei der zweite Kreisring des Hauben-Oberteils über den ersten Kreisring außen eingezogen ist
b) Verfahren des Heizpressen-Oberteils um den ersten Teilhub, Ausziehen des zweiten Kreisringes in Richtung Heizpressen-Unterteil, bis dieses auf dem Heizpressen-Unterteil aufsetzt, um einen geschlossenen Haubeninnenraum zu erhalten, während die Vulkanisierform nur zum Teil geschlossen ist
c) nur im Fall, dass die Ringdichtungen ein in seinem Durchmesser veränderbarer Schlauch sind: Aufpumpen der kreisringförmigen Schlauchdichtung, um die Haube vakuumdicht abzudichten
d) Öffnen der Verbindung zwischen Vakuumtank und Haubeninnenraum zur Erzeugung eines Teil-Vakuums in dem vakuumdicht geschlossenen Haubeninnenraum durch Druckausgleich zwischen Vakuumtank und Haubeninnenraum
e) bei Erhalt des Teil-Vakuums im Haubeninnenraum: Schließen der Verbindung zwischen Vakuumtank und Haube, Öffnen der Verbindung zwischen Haubeninnenraum und Pumpe und Abpumpen der restlich verbliebenden Luft aus dem Haubeninnenraum zur Erzeugung des Vakuums
f) Verfahren des Heizpressen-Oberteils um den zweiten Teilhub, bei dem sich der zweite Kreisring über den ersten Kreisring außen einzieht, so dass die Vulkanisierform vollständig geschlossen wird und anschließendes Schließen der Verbindung zwischen dem Haubeninnenraum und der Pumpe
g) Vulkanisation des Rohreifen und Öffnen der Verbindung zwischen Pumpe und Vakuumtank und Erzeugung eines Vakuums im Vakuumtank, wobei die Verbindung der Pumpe zu dem Haubeninnenraum und die Verbindung des Vakuumtanks zum Haubeninnenraum jeweils geschlossen sind
h) Öffnen der Heizpresse und Entladen des fertig vulkanisierten Reifens und zur Vulkanisierung jedes weiteren Reifens Wiederholung der Schritte a) - h).

Durch das vorgenannte Verfahren ist zeiteffizient die Reifenvulkanisation auszuführen. Der Vakuumtank wird während der Vulkanisation eines ersten Reifens bereits für die Erzeugung des Vakuums in der Haube für die Vulkanisation eines zweiten, nachfolgenden Reifens vorbereitet, so dass die Haube binnen kürzester Zeit in ein Vakuum gebracht werden kann.

Vorteilhaft ist es, wenn man zur Erleichterung von Schritt h) vorher ein weiteres in der Haube angeordnetes Ventil zum Brechen des Vakuums in der Haube öffnet und anschließend wieder schließt.

Ein Ausführungsbeispiel einer Heizpresse und das Verfahren zur Vakuum-Vulkanisation eines Fahrzeugluftreifens samt weiterer Vorteile sind anhand der nachfolgenden schematischen Figuren 1 bis 4 beschrieben. Es zeigen die:
- Fig. 1: eine erste Ausführungsform einer erfindungsgemäßen Heizpresse mit Container im geöffneten Zustand;
- Fig. 2: die Heizpresse der Fig. 1 in der Schließphase nach einem 1. Teilhub;
- Fig. 3: die Heizpresse der Fig. 1 und der Fig. 2 in geschlossenem Zustand nach einem 2. Teilhub;
- Fig. 4: eine zweite Ausführungsform einer erfindungsgemäßen Heizpresse mit Container im geöffneten Zustand;.
- Fig. 5: die Heizpresse der Fig. 4 in der Schließphase nach einem 1. Teilhub;
- Fig. 6: die Heizpresse der Fig. 4 und der Fig. 5 in geschlossenem Zustand nach einem 2. Teilhub;
- Fig. 7: eine dritte Ausführungsform einer erfindungsgemäßen Heizpresse mit Container im geöffneten Zustand;.
- Fig. 8: die Heizpresse der Fig. 7 in der Schließphase nach einem 1. Teilhub;
- Fig. 9: die Heizpresse der Fig. 7 und der Fig. 8 in geschlossenem Zustand nach einem 2. Teilhub;
- Fig. 10: eine vierte Ausführungsform einer erfindungsgemäßen Heizpresse mit Container im geöffneten Zustand;.
- Fig. 11: die Heizpresse der Fig. 10 in der Schließphase nach einem 1. Teilhub;

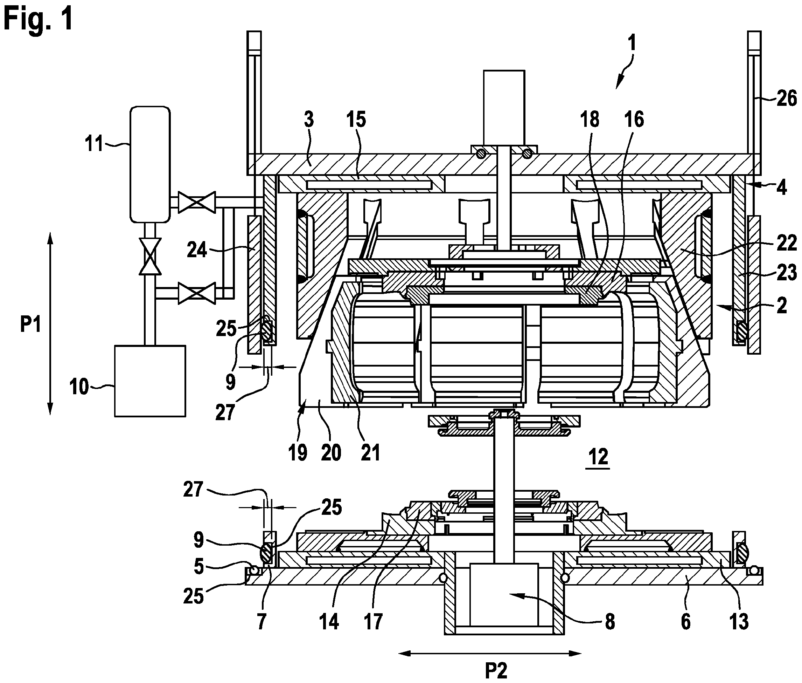

Die Fig. 1 zeigt eine erste Ausführungsform einer erfindungsgemäßen Heizpresse 1 mit einem Container 2 im geöffneten Zustand. Der Reifenrohling kann in die Heizpresse 1 eingebracht werden.

Die Heizpresse 1 umfasst ein Heizpressen-Oberteil 3, welches mit dem Hauben-Oberteil 4 in Verbindung steht und ein Heizpressen-Unterteil 6, welches mit dem Hauben-Unterteil 7 in Verbindung steht und weist die entsprechenden Mechanismen zum Positionieren des zu vulkanisierenden Reifens, zur Betätigung der Bestandteile der Vulkanisationsform, zum Einbringen der Heizmedien und zum Entfernen des fertig vulkanisierten Reifens auf. Der Container 2 ist während des Vulkanisationsvorganges durch die zweiteilige Haube 4, 7 umschlossen. Das Hauben-Oberteil 4 weist einen ersten und einen zweiten Kreisring 23, 24 auf, wobei der zweite Kreisring 24 mit einem größeren Durchmesser als der erste Kreisring 23 versehen ist. Der zweite Kreisring 24 ist teleskopartig mittels eines Aktuators 26 in axialer Richtung P1 auf den ersten Kreisring 23 ein- und ausziehbar. Das Hauben-Unterteil 7 weist einem dritten Kreisring auf. Der dritte Kreisring 7 und der erste Kreisring 23 des Hauben-Oberteiles 3 weisen den gleichen Innendurchmesser und den gleichen Außendurchmesser auf und sind mit ihren Stirnflächen fluchtend in der Heizpresse 1 angeordnet. Der Durchmesser des zweiten Kreisrings 24 des Hauben-Oberteils 4 ist leicht größer als der Durchmesser des dritten Kreisrings 7 des Hauben-Unterteils.

Es ist ein "Mittenmechanismus" 8 angeordnet. Dieser ist -soweit notwendig - ebenfalls mit Dichtungen bestückt, um eine Vakuumdichtheit zwischen Mittenmechanismus und Heizpressen-Ober- und Unterteil herzustellen. An dem Mittenmechanismus 8 ist ein Heizbalg (nicht dargestellt) befestigt, welcher in den Reifenrohling (nicht dargestellt) einfügbar ist. Zudem sind Düsen (nicht dargestellt) am Mittenmechanismus 8 angeordnet, durch welche ein Heizmedium in den Heizbalg (nicht dargestellt) eingebracht werden kann.

Das Haubenoberteil 4 und das Haubenunterteil 7 sind luftdicht bzw. vakuumdicht ausgeführt und bilden in geschlossenem Zustand einen vakuumdichten Haubeninnenraum 12 aus. Hierfür sind Ringdichtungen 5, 9 angeordnet. Eine Ringdichtung 9 ist zwischen dem ersten und zweiten Kreisring 23, 24 für ein luftdicht gestaltetes Haubenoberteil 3 in einer in dem ersten Kreisring 23 angeordneten und zum zweiten Kreisring 24 weisenden Nut 25 angeordnet. Ebenso ist eine Ringdichtung 9 in einer der im ersten Kreisring 23 entsprechenden Nut 25 im dritten Kreisring 7 an seiner Außenseite umlaufend angeordnet. Eine weitere liegende Ringdichtung 5 ist fluchtend zu dem zweiten Kreisring 24 in einer zum Heizpressen-Oberteil 3 hin offenen Nut 25 angeordnet. Somit ist die geschlossene Haube an den Stoßstellen zwischen Hauben-Oberteil 3 und Hauben-Unterteil 7 sowie zwischen dem ersten und dem zweiten Kreisring 23, 24 luftdicht gestaltet. Die Ringdichtung 5, 9 ist ein in seinem Durchmesser veränderbarer Schlauch. Der Durchmesser der Ringdichtung 5, 9 ist geringfügig größer als die Tiefe 27 der Nut 25.

Mittels einer Pumpe 10 und einem Vakuumtank 11 ist ein Vakuum in dem Haubeninnenraum (= Innenraum der Haube) 12 erzeugbar, wobei der Vakuumtank 11 und die Pumpe 10 mit dem Innenraum 12 der Haube in Verbindung stehen und wobei der Vakuumtank 11 und die Pumpe 10 miteinander in Verbindung stehen. Durch ein Vakuum im Haubeninnenraum 12, insbesondere während des Einformens und der Vulkanisation des Reifens, ist auf übliche in der Formfläche der Vulkanisierform angeordnete Entlüftungsventile komplett verzichtet.

Der Container 2 ist ein üblicher, bereits im Stand der Technik bekannter Container 2.

Der Container 2 beinhaltet die segmentierte Vulkanisierform mit einer unteren Heizplatte 13, einer unteren Seitenwandschale 14, einer oberen Heizplatte 15, einer oberen Seitenwandschale 16, einem unteren Wulstring 17 und einem oberen Wulstring 18. Zu jenen Bestandteilen der Vulkanisationsform, die zum Öffnen und Schließen in senkrechter (= axialer) Richtung (Pfeil P1) bewegt werden, gehören der Segmentring 19 bestehend aus sieben bis neun Segmentschuhen 20 und die daran befestigten Profil-/Formsegmente 21 sowie die obere Seitenwandschale 16 mit dem oberen Wulstring 18. Die Segmentschuhe 20 werden zum Schließen und Öffnen der Vulkanisationsform radial, in Richtung des Pfeiles P2, auseinandergefahren. An der oberen Heizplatte 15 ist ein Schließring 22 angeordnet, welcher eine abgeschrägte Innenfläche aufweist, die mit abgeschrägten Außenflächen der Segmentschuhe 20 des Segmentringes 19 derart zusammenwirken, dass beim Schließen der Vulkanisationsform die Segmentschuhe 20 in radialer Richtung zum geschlossenen Segmentring 19 zusammengefahren werden. In der unteren Heizplatte 13, der oberen Heizplatte 15 und im Schließring 22 sind Heizkammern enthalten, in welche zum Vulkanisieren des Reifens zumindest ein Heizmedium, insbesondere Sattdampf (Wasserdampf) eingeleitet wird. Auf diese Weise wird der Rohreifen (nicht dargestellt) von außen über die Segmentschuhe 20, die Seitenwandschalen 14, 16 und die Wulstringe 17, 18 beheizt, sodass diese Heizung üblicherweise als Außenheizung bezeichnet wird.

Ein üblicher Heizbalg (nicht dargestellt) ist in bekannter Weise angeordnet und wird mit zumindest einem Heizmedium unter Druck befüllt, um den Rohreifen in der Form von innen her zu zentrieren, wobei der Heizbalg in eine reifengemäße Torusform gebracht wird. Nachdem der Rohreifen über den Heizbalg von innen erhitzt wird, wird diese Art der Heizung als Innenheizung bezeichnet.

In der Fig. 1 ist die Heizpresse 1 geöffnet, wobei der zweite Kreisring 24 des Hauben-Oberteils 3 über den ersten Kreisring 23 teleskopartig eingezogen ist. Der Rohreifen kann in den Container 2 eingelegt werden.

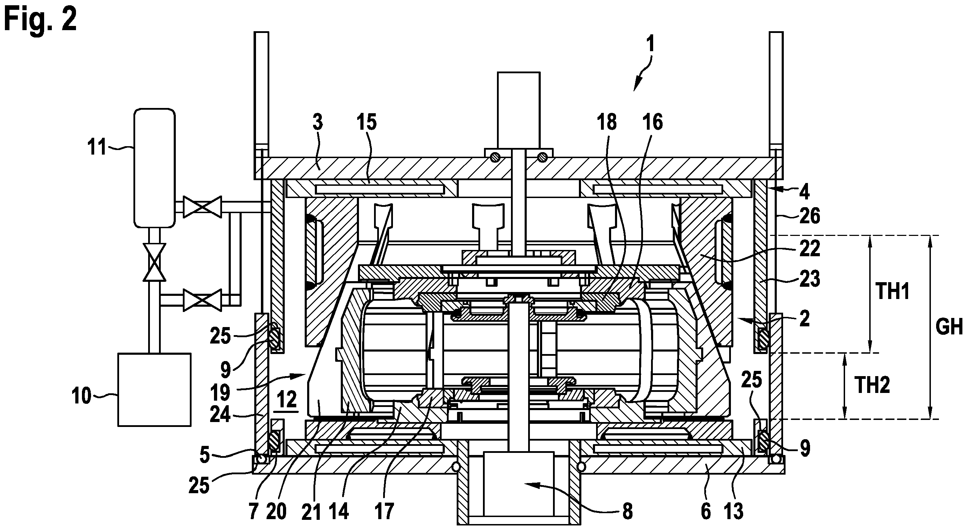

In der Fig. 2 ist die Heizpresse 1 der Fig. 1 in der Schließphase nach einem 1. Teilhub TH₁ dargestellt.

Das Heizpressen-Oberteil 3 ist um den ersten Teilhub TH₁ verfahren und der zweite Kreisring 24 in Richtung Heizpressen-Unterteil 7 ausgezogen, so dass dieser auf dem Heizpressen-Unterteil 7 im Bereich der liegenden Ringdichtung 5 aufsetzt und mit dem dritten Kreisring 7 im Bereich der Ringdichtung 9 überlappt. Die Ringdichtung 9 dichtet den kleinen Zwischenraum zwischen dem zweiten Kreisring 24 des Hauben-Oberteils 4 und dem dritten Kreisring 7 des Hauben-Unterteils ab, wenn der zweite Kreisring 24 auf dem Hauben-Unterteil aufsitzt. Es ist ein geschlossener vakuumdichter Haubeninnenraum 12 erhalten, während die Vulkanisierform nur zum Teil geschlossen ist. Im Fall, dass die Ringdichtungen 5, 9 ein in seinem Durchmesser veränderbarer Schlauch sind, werden diese aufgepumpt, um die Haube 4, 7 vakuumdicht abzudichten. Es wird die Verbindung zwischen Vakuumtank 11 und Haubeninnenraum 12 zur Erzeugung eines Teil-Vakuums in dem vakuumdicht geschlossenen Haubeninnenraum 12 durch Druckausgleich zwischen Vakuumtank 11 und Haubeninnenraum 12 geöffnet. Bei Erhalt des Teil-Vakuums im Haubeninnenraum 12 wird die Verbindung zwischen Vakuumtank 11 und Haube 4, 7 geschlossen, die Verbindung zwischen Haubeninnenraum 12 und Pumpe 10 geöffnet und die restlich verbliebende Luft aus dem Haubeninnenraum 12 zur Erzeugung des Vakuums abgepumpt.

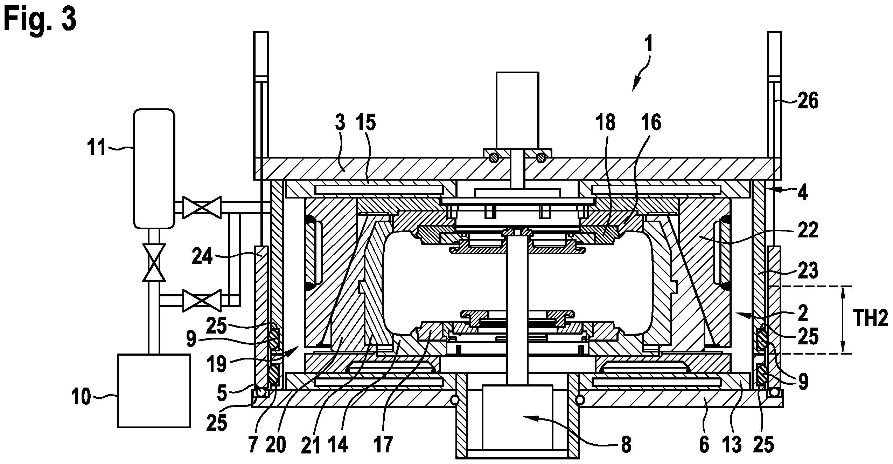

Die Fig. 3 zeigt die Heizpresse der Fig. 1 und der Fig. 2 in geschlossenem Zustand nach einem 2. Teilhub TH₂. Nachdem im Innenraum 12 der geschlossenen Haube 4, 7 der Fig. 2 ein Vakuum erzeugt ist, wird nun durch die Ausführung eines 2. Teilhubes TH₂ , bei dem sich der zweite Kreisring 24 außen über den ersten Kreisring 23 einzieht, die luftleere Vulkanisierform komplett geschlossen und die Verbindung zwischen Vakuumtank 11 und Haube 4, 7 geschlossen.

Anschließendes schließt man die Verbindung zwischen dem Haubeninnenraum 12 und der Pumpe 10. Es erfolgt die Vulkanisation des Rohreifen.

Die Summe aus dem 1. Teilhub TH1 und dem 2. Teilhub TH₂ ergibt den Gesamthub GH. Der Reifen wird vulkanisiert. Bei einem PKW-Reifen dauert das Vulkanisieren desselben etwa 15 Minuten. Während dieser Zeit wird die Verbindung zwischen Pumpe 10 und Vakuumtank 11 zur Erzeugung eines Vakuums im Vakuumtank 11 geöffnet, wobei die Verbindung der Pumpe 10 zur Haube 4, 7 und die Verbindung des Vakuumtanks 11 zur Haube 4, 7 jeweils geschlossen sind. Nach erfolgter Vulkanisation des Reifens wird das Volumen des Haubeninnenraumes 12 über ein Ventil belüftet (nicht dargestellt) und die Heizpresse 1 geöffnet, um den fertig vulkanisierten Reifen aus dem die Vulkanisierform aufweisenden Container 2 zu entladen. Hierzu fährt zunächst das Hauben-Oberteil 4 auf, der zweite Kreisring 24 wird außen über den ersten Kreisring 23 eingezogen und die Profilsegmente 21 werden gleichzeitig in radialer Richtung P2 nach außen verfahren. Der Reifen wird freigegeben.

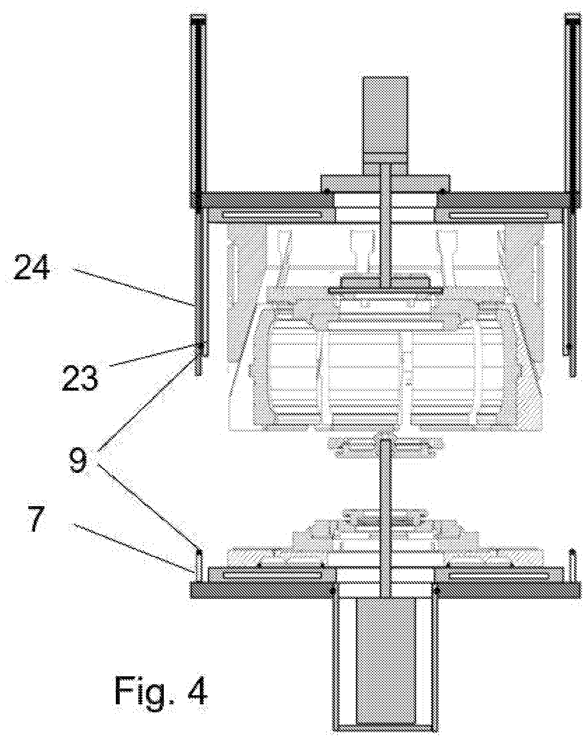

Bei den folgenden weiteren Ausführungsformen einer erfindungsgemäßen Heizpresse 1, die in den Figuren 4 bis 11 gezeigt sind, sind fast alle Elemente und Funktionen gleich ausgeführt wie bei der ersten Ausführungsform. Unterschiede bestehen nur im Größenverhältnis des Durchmessers des zweiten Kreisrings 24 des Hauben-Oberteils 4 zum Durchmesser des dritten Kreisrings 7 des Hauben-Unterteils. Erläutert wird daher lediglich eine unterschiedliche Anordnung des Dichtrings 9 zwischen dem zweiten Kreisring 24 des Hauben-Oberteils 4 und dem dritten Kreisring 7 des Hauben-Unterteils.

Mit Bezugszeichen sind daher lediglich der erste Kreisring 23 und der zweite Kreisring 24 des Hauben-Oberteils und der dritte Kreisring 7 des Hauben-Unterteils versehen sowie die vakuumdichten Dichtungen zwischen den beiden Kreisringen 23, 24 des Hauben-Oberteils und zwischen dem zweiten Kreisring 24 des Hauben-Oberteils und dem dritten Kreisring des Hauben-Unterteils.

Alle anderen Elemente der Heizpresse sind nicht explizit mit Bezugszeichen versehen und die mit der Heizpresse verbundenen Mittel zur Erzeugung eines Vakuums im Innenraum der Haube der Heizpresse wie Pumpe 10, Vakuumtank 11 und zugehörige Leitungen und Ventile sind der Vereinfachung halber in den Figuren 4 bis 11 nicht gezeigt, auch wenn sie genauso in den gezeigten Heizpressen vorhanden sind wie in den Figuren 1 bis 3 gezeigt. Die nicht mit Bezugszeichen versehenen Elemente der Heizpresse und die nicht gezeigten Mittel zur Erzeugung eines Vakuums im Innenraum der Haube der Heizpresse wurden bereits im Zusammenhang mit der ersten Ausführungsform beschrieben und genauso ihre Funktion und die Gesamtfunktionsweise einer erfindungsgemäßen Heizpresse.

Die Fig. 4 zeigt eine zweite Ausführungsform einer erfindungsgemäßen Heizpresse mit einem Container 2 im geöffneten Zustand. Das Hauben-Oberteil weist einen ersten und einen zweiten Kreisring 23, 24 auf, wobei der zweite Kreisring 24 mit einem größeren Durchmesser als der erste Kreisring 23 versehen ist. Der zweite Kreisring 24 ist teleskopartig mittels eines Aktuators 26 in axialer Richtung P1 auf den ersten Kreisring 23 ein- und ausziehbar. Das Hauben-Unterteil 7 weist einem dritten Kreisring auf. Der Durchmesser des zweiten Kreisrings 24 des Hauben-Oberteils ist genau so groß wie der Durchmesser des dritten Kreisrings 7 des Hauben-Unterteils.

Das Hauben-Oberteil 4 und das Hauben-Unterteil 7 sind luftdicht bzw. vakuumdicht ausgeführt und bilden in geschlossenem Zustand einen vakuumdichten Haubeninnenraum 12 aus. Hierfür sind Ringdichtungen 9 angeordnet. Eine Ringdichtung 9 ist zwischen dem ersten und zweiten Kreisring 23, 24 für ein luftdicht gestaltetes Hauben-Oberteil 4 in einer in dem ersten Kreisring 23 angeordneten und zum zweiten Kreisring 24 weisenden Nut 25 angeordnet. Ebenso weist der dritte Kreisring 23 eine an seinem oberen Ende eine umlaufende vakuumdichte Ringdichtung 9 auf. Somit ist die geschlossene Haube an den Stoßstellen zwischen Hauben-Oberteil 4 und Hauben-Unterteil 7 sowie zwischen dem ersten und dem zweiten Kreisring 23, 24 luftdicht gestaltet. Die Ringdichtung 9 ist ein in seinem Durchmesser veränderbarer Schlauch. Der Durchmesser der Ringdichtung 9 ist geringfügig größer als die Tiefe 27 der Nut 25, in der sie angeordnet.

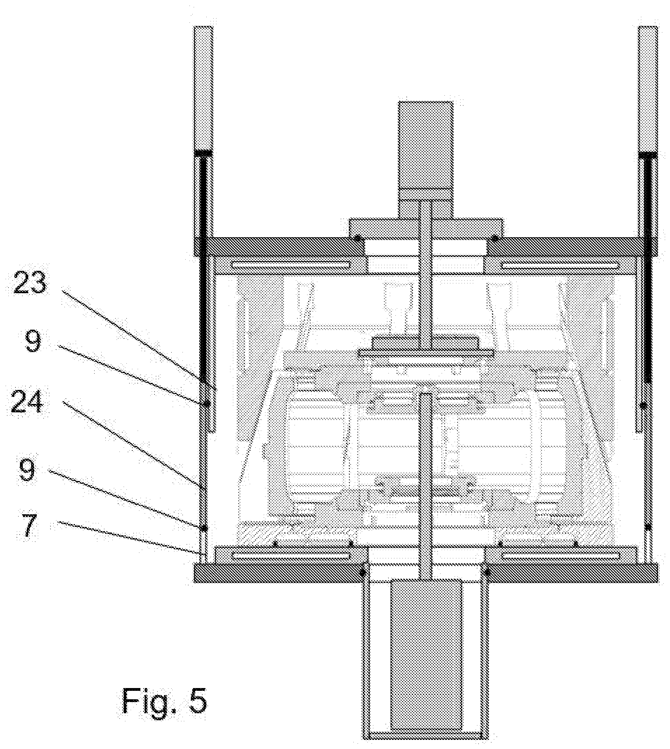

In der Fig. 5 ist die Heizpresse 1 der Fig. 4 in der Schließphase nach einem 1. Teilhub TH₁ dargestellt.

Das Heizpressen-Oberteil 3 ist um den ersten Teilhub TH₁ verfahren und der zweite Kreisring 24 in Richtung Heizpressen-Unterteil 7 ausgezogen, so dass dieser auf dem dritten Kreisring 7 des Heizpressen-Unterteils 7 aufsetzt. Die Ringdichtung 9 am oberen Ende des dritten Kreisrings 7 dichtet dann zwischen dem zweiten Kreisring 24 des Haubenoberteils 4 und dem dritten Kreisring 7 des Hauben-Unterteils ab, wenn der zweite Kreisring 24 auf dem Hauben-Unterteil aufsitzt. Es ist ein geschlossener vakuumdichter Haubeninnenraum 12 erhalten, während die Vulkanisierform nur zum Teil geschlossen ist. Im Fall, dass die Ringdichtungen 9 ein in seinem Durchmesser veränderbarer Schlauch sind, werden diese aufgepumpt, um die Haube 4, 7 vakuumdicht abzudichten.

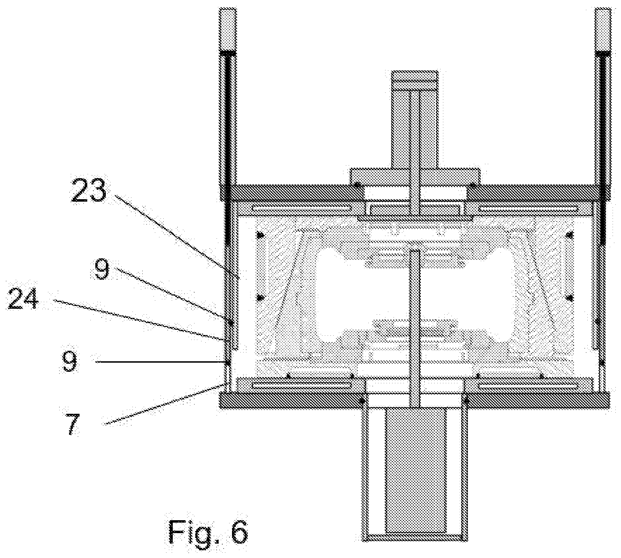

Die Fig. 6 zeigt die Heizpresse der Fig. 4 und der Fig. 5 in geschlossenem Zustand nach einem 2. Teilhub TH₂. Nachdem im Innenraum 12 der geschlossenen Haube 4, 7 der Fig. 5 ein Vakuum erzeugt ist, wird nun durch die Ausführung eines 2. Teilhubes TH₂ , bei dem sich der zweite Kreisring 24 außen über den ersten Kreisring 23 einzieht, die luftleere Vulkanisierform komplett geschlossen.

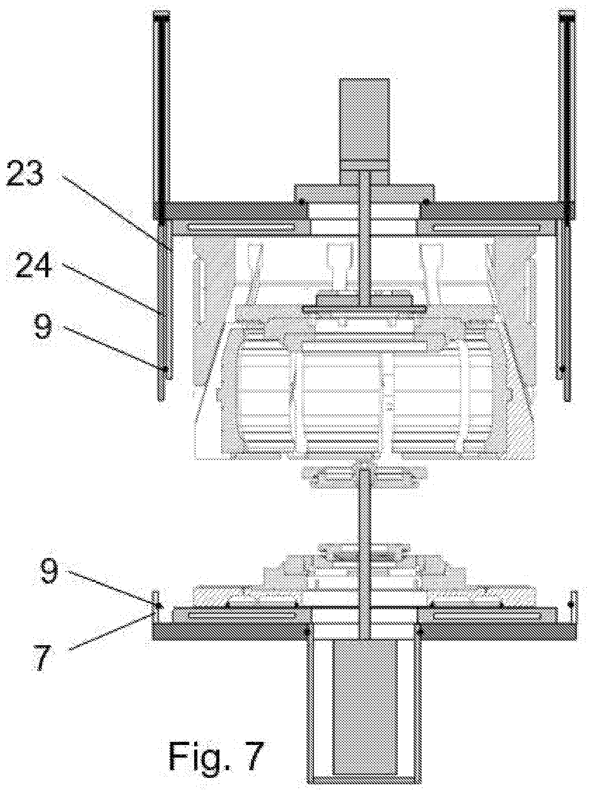

Die Fig. 7 zeigt eine dritte Ausführungsform einer erfindungsgemäßen Heizpresse mit einem Container 2 im geöffneten Zustand. Das Hauben-Oberteil 4 weist einen ersten und einen zweiten Kreisring 23, 24 auf, wobei der zweite Kreisring 24 mit einem größeren Durchmesser als der erste Kreisring 23 versehen ist. Der zweite Kreisring 24 ist teleskopartig mittels eines Aktuators 26 in axialer Richtung P1 auf den ersten Kreisring 23 ein- und ausziehbar. Das Hauben-Unterteil 7 weist einem dritten Kreisring auf. Der Durchmesser des zweiten Kreisrings 24 des Hauben-Oberteils ist leicht kleiner als der Durchmesser des dritten Kreisrings 7 des Hauben-Unterteils.

Das Hauben-Oberteil 4 und das Hauben-Unterteil 7 sind luftdicht bzw. vakuumdicht ausgeführt und bilden in geschlossenem Zustand einen vakuumdichten Haubeninnenraum 12 aus. Hierfür sind Ringdichtungen 9 angeordnet. Eine Ringdichtung 9 ist zwischen dem ersten und zweiten Kreisring 23, 24 für ein luftdicht gestaltetes Hauben-Oberteil 4 in einer in dem ersten Kreisring 23 angeordneten und zum zweiten Kreisring 24 weisenden Nut 25 angeordnet. Ebenso weist der dritte Kreisring 23 eine an seiner Innenseite umlaufende vakuumdichte Ringdichtung 9 auf. Somit ist die geschlossene Haube an den Stoßstellen zwischen Hauben-Oberteil 4 und Hauben-Unterteil 7 sowie zwischen dem ersten und dem zweiten Kreisring 23, 24 luftdicht gestaltet. Die Ringdichtung 9 ist ein in seinem Durchmesser veränderbarer Schlauch. Der Durchmesser der Ringdichtung 9 ist geringfügig größer als die Tiefe 27 der Nut 25, in der sie angeordnet.

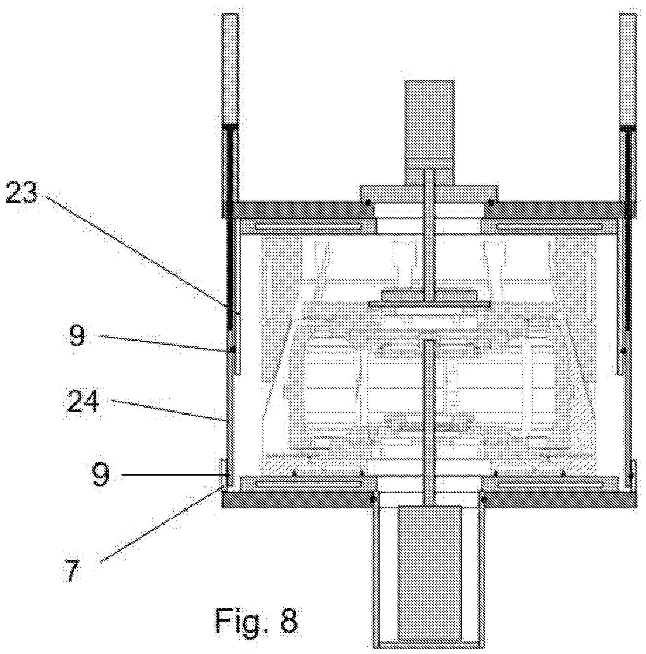

In der Fig. 8 ist die Heizpresse 1 der Fig. 7 in der Schließphase nach einem 1. Teilhub TH₁ dargestellt.

Das Heizpressen-Oberteil 3 ist um den ersten Teilhub TH₁ verfahren und der zweite Kreisring 24 in Richtung Heizpressen-Unterteil 7 ausgezogen, so dass dieser auf dem Heizpressen-Unterteil 7 aufsetzt. Die Ringdichtung 9 an der Innenseite des dritten Kreisrings 7 dichtet dann den kleinen Zwischenraum zwischen dem zweiten Kreisring 24 des Haubenoberteils 4 und dem dritten Kreisring 7 des Hauben-Unterteils ab, wenn der zweite Kreisring 24 auf dem Hauben-Unterteil aufsitzt. Es ist ein geschlossener vakuumdichter Haubeninnenraum 12 erhalten, während die Vulkanisierform nur zum Teil geschlossen ist. Im Fall, dass die Ringdichtungen 9 ein in seinem Durchmesser veränderbarer Schlauch sind, werden diese aufgepumpt, um die Haube 4, 7 vakuumdicht abzudichten.

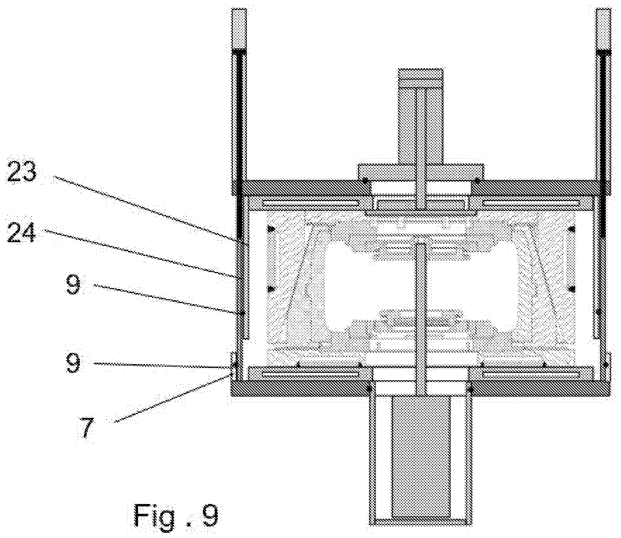

Die Fig. 9 zeigt die Heizpresse der Fig. 7 und der Fig. 8 in geschlossenem Zustand nach einem 2. Teilhub TH₂. Nachdem im Innenraum 12 der geschlossenen Haube 4, 7 der Fig. 8 ein Vakuum erzeugt ist, wird nun durch die Ausführung eines 2. Teilhubes TH₂ , bei dem sich der zweite Kreisring 24 außen über den ersten Kreisring 23 einzieht, die luftleere Vulkanisierform komplett geschlossen.

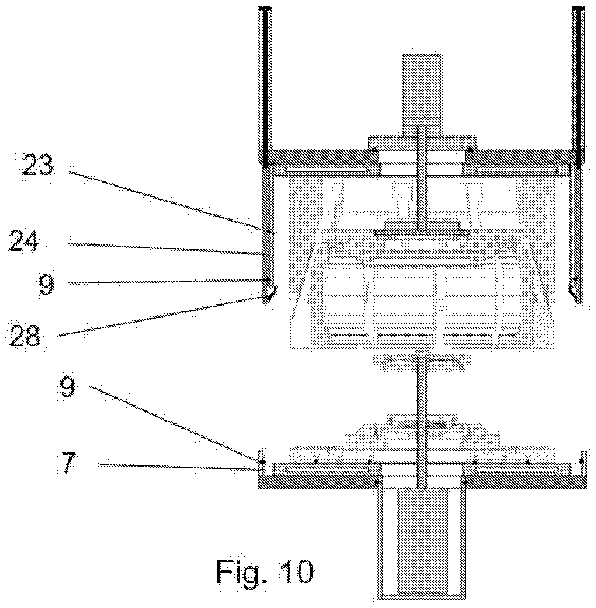

Die Fig. 10 zeigt eine vierte Ausführungsform einer erfindungsgemäßen Heizpresse mit einem Container 2 im geöffneten Zustand. Die Ausführungsform unterscheidet sich von der zuvor beschriebenen dritten Ausführungsform lediglich dadurch, dass als zusätzliche vakuumdichte Dichtung zwischen dem ersten Kreisring 23 und dem zweite Kreisring 24 des Haubenoberteils eine elastisch dehnbare, vakuumdichte Gummimanschette 28 vorgesehen ist. Diese ist im unteren Teil der beiden Kreisringe 23, 24 innen jeweils kreisförmig befestigt.

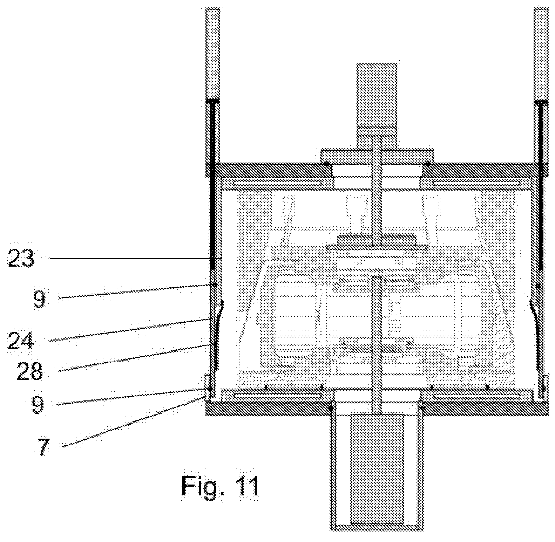

In der Fig. 11 ist die Heizpresse 1 der Fig. 10 in der Schließphase nach einem 1. Teilhub TH₁ dargestellt.

Das Heizpressen-Oberteil 3 ist um den ersten Teilhub TH₁ verfahren und der zweite Kreisring 24 in Richtung Heizpressen-Unterteil 7 ausgezogen, so dass dieser auf dem Heizpressen-Unterteil 7 aufsetzt. Hierdurch wird die Gummimanschette 28, die an beiden Kreisringen 23, 24 befestigt ist, in Hubrichtung gedehnt.

### Bezugszeichenliste

### (Teil der Beschreibung)

- 1: Heizpresse
- 2: Container
- 3: Heizpressen-Oberteil
- 4: Hauben-Oberteil
- 5: Ringdichtung
- 6: Heizpressen-Unterteil
- 7: Hauben-Unterteil = dritter Kreisring
- 8: Mittenmechanismus
- 9: Ringdichtung
- 10: Pumpe
- 11: Vakuumtank
- 12: Innenraum der Haube
- 13: untere Heizplatte
- 14: untere Seitenwandschale
- 15: obere Heizplatte
- 16: obere Seitenwandschale
- 17: unterer Wulstring
- 18: oberer Wulstring
- 19: Segmentring
- 20: Segmentschuh
- 21: Profilsegment / Formsegment
- 22: Schließring
- 23: erster Kreisring
- 24: zweiter Kreisring
- 25: Nut
- 26: Aktuator
- 27: Tiefe der Nut
- 28: Gummimanschette
- TH₁: 1. Teilhub
- TH₂: 2. Teilhub
- GH: Gesamthub

## Patentansprüche

1. Heizpresse (1) zum Vulkanisieren eines Fahrzeugreifens unter Vakuum
- mit einem Heizpressen-Oberteil (3) und einem Heizpressen-Unterteil (6), wobei das Heizpressen-Oberteil (3) ein an dieses montiertes Hauben-Oberteil (4) und in diesem Hauben-Oberteil (4) einen Formteile (16, 18, 21) einer Vulkanisierform enthaltenden Container (2) aufweist, wobei das Hauben-Oberteil (4) einen fest an das Heizpressen-Oberteil (3) angeordneten ersten Kreisring (23) und einen an diesen ersten Kreisring koaxial in axialer Richtung anschließenden und in axialer Richtung P1 über den ersten Kreisring (23) teleskopartig außen ein- und ausziehbaren zweiten Kreisring (24) aufweist
- wobei das Heizpressen-Oberteil (3) und das Heizpressen-Unterteil (6) mit dem Container (2) derart in Verbindung stehen, so dass beim Herunterfahren des Heizpressen-Oberteils (3) über einen in axialer Richtung (P1) erfolgenden Gesamthub (GH), bei dem das offene Ende des Hauben-Oberteils (4) auf das Heizpressen-Unterteil (6) fährt, die Formteile (14, 16, 17, 18, 21) der Vulkanisierform in radialer Richtung (P2) schließbar sind,
- wobei vakuumdichte Dichtungen (5, 9) zwischen den beiden Kreisringen (23, 24) sowie dem zweiten Kreisring (24) und dem Heizpressen-Unterteil (6) angeordnet sind,
- wobei der Gesamthub (GH) aus einem ersten Teilhub (TH₁) und einem zweiten Teilhub (TH2) fahrbar ist,
- wobei nach dem ersten Teilhub (TH₁) das Hauben-Oberteil (3) derart verfahrbar ist, dass dieses mit dem ausgezogenen zweiten Kreisring (24) auf dem Heizpressen-Unterteil (6) aufsitzt und der Innenraum der Haube (12) durch die Dichtungen (5, 9) vakuumdicht schließbar ist, während die Vulkanisierform jedoch noch luftdurchlässig geöffnet ist und
- wobei eine Pumpe (10) und ein Vakuumtank (11) angeordnet sind, mittels derer im Innenraum der Haube (12) nach dem ersten Teilhub (TH₁) ein Vakuum erzeugbar ist, wobei der Vakuumtank (11) und die Pumpe (10) mit dem Innenraum (12) der Haube (4,7,31) in Verbindung stehen und wobei der Vakuumtank (11) und die Pumpe (10) miteinander in Verbindung stehen und
- wobei nach dem zweiten Teilhub (TH₂) das Hauben-Oberteil (3) derart verfahrbar ist, dass der zweite Kreisring (24) weiter über den ersten Kreisring (23) außen einziehbar ist und die Vulkanisierform unter Vakuumbedingungen im Innenraum der Haube (12) vollständig schließbar ist.

2. Heizpresse (1) nach Anspruch 1, **dadurch gekennzeichnet, dass** ein hydraulischer, pneumatischer oder elektrischer Aktuator (26) angeordnet ist, durch den der zweite Kreisring (24) des Hauben-Oberteiles (3) in axialer Richtung (P1) verfahrbar ist.

3. Heizpresse (1) nach Anspruch 1 oder 2, **dadurch gekennzeichnet, dass** an dem Heizpressen-Unterteil (6) ein Hauben-Unterteil (7) in Form eines dritten Kreisringes angeordnet ist, wobei der erste Kreisring (23) des Hauben-Oberteiles (3) und der dritte Kreisring des Hauben-Unterteiles (7) den gleichen Innendurchmesser und den gleichen Außendurchmesser aufweisen und miteinander fluchtend in der Heizpresse (1) angeordnet sind.

4. Heizpresse (1) nach einem oder mehreren der vorangehenden Ansprüche, **dadurch gekennzeichnet, dass** die Dichtungen Ringdichtungen (5, 9) sind und zumindest eine Ringdichtung (9) im unteren Bereich des Hauben-Oberteils (4) und zumindest eine weitere die Ringdichtung (9) im oberen Bereich des Hauben-Unterteils (7) angeordnet sind.

5. Heizpresse (1) nach Anspruch 4, **dadurch gekennzeichnet, dass** die Ringdichtungen (5, 9) in kreisringförmigen Nuten (25) angeordnet sind, wobei der Durchmesser der Ringdichtungen (5, 9) geringfügig größer als die Tiefe der Nuten (25) sind.

6. Heizpresse (1) nach Anspruch 4 oder 5, **dadurch gekennzeichnet, dass** die Ringdichtung (5, 9) aus Vollmaterial bestehen.

7. Heizpresse (1) nach Anspruch 4 oder 5, **dadurch gekennzeichnet, dass** die Ringdichtungen (5, 9) in ihrem Durchmesser veränderbare Schläuche sind.

8. Heizpresse (1) nach einem oder mehreren der Ansprüche 4 bis 7, **dadurch gekennzeichnet, dass** die Ringdichtungen (5, 9) differentiell gepumpte Doppelringdichtungen sind.

9. Heizpresse (1) nach einem oder mehreren der vorangehenden Ansprüche, **dadurch gekennzeichnet, dass** im Bereich oberhalb und/oder unterhalb der Ringdichtungen (9) Gleitbänder aus abriebfesten Hochtemperatur-Polymer, wie zum Beispiel aus PEEK, in den Haubenteilen (4, 7) angeordnet sind.

10. Heizpresse (1) nach einem oder mehreren der vorangehenden Ansprüche, **dadurch gekennzeichnet, dass** der Vakuumtank (11) ein Volumen aufweist, welche etwa 5 bis 10 mal größer als das Volumen der geschlossenen Hauben (4, 7) ist.

11. Verfahren zur Vulkanisation eines Fahrzeugluftreifens unter Vakuum in einer Heizpresse (1) nach einem oder mehreren der Ansprüche 1 bis 10, **dadurch gekennzeichnet, dass** man folgende Schritte nacheinander ausführt:
a) Beladen der geöffneten Heizpresse (1) durch Einlegen des zu vulkanisierenden Rohreifens in den Container (2), wobei der zweite Kreisring (24) des Hauben-Oberteils (4) über den ersten Kreisring (23) außen eingezogen ist
b) Verfahren des Heizpressen-Oberteils (3) um den ersten Teilhub (TH₁), Ausziehen des zweiten Kreisringes (24) in Richtung Heizpressen-Unterteil (6), bis dieses auf dem Heizpressen-Unterteil (6) aufsetzt, um einen geschlossenen Haubeninnenraum (12) zu erhalten, während die Vulkanisierform nur zum Teil geschlossen ist
c) nur im Fall, dass die Ringdichtungen (5, 9) ein in seinem Durchmesser veränderbarer Schlauch sind: Aufpumpen der kreisringförmigen Schlauchdichtung, um den Haubeninnenraum (12) vakuumdicht abzudichten
d) Öffnen der Verbindung zwischen Vakuumtank (11) und Haubeninnenraum (12) zur Erzeugung eines Teil-Vakuums in dem vakuumdicht geschlossenen Haubeninnenraum (12) durch Druckausgleich zwischen Vakuumtank (11) und Haubeninnenraum (12)
e) bei Erhalt des Teil-Vakuums im Haubeninnenraum (12): Schließen der Verbindung zwischen Vakuumtank (11) und Haubeninnenraum (12), Öffnen der Verbindung zwischen Haubeninnenraum (12) und Pumpe (10) und Abpumpen der restlich verbliebenden Luft aus dem Haubeninnenraum (12) zur Erzeugung des Vakuums
f) Verfahren des Heizpressen-Oberteils (3) um den zweiten Teilhub (TH₂), bei dem man den zweite Kreisring (24) über den ersten Kreisring (23) außen einzieht, so dass die Vulkanisierform vollständig geschlossen wird und anschließendes Schließen der Verbindung zwischen dem Haubeninnenraum (12) und der Pumpe (10)
g) Vulkanisation des Rohreifen und Öffnen der Verbindung zwischen Pumpe (10) und Vakuumtank (11) und Erzeugung eines Vakuums im Vakuumtank (11), wobei die Verbindung der Pumpe (10) zu dem Haubeninnenraum (12) und die Verbindung des Vakuumtanks (11) zum Haubeninnenraum (12) jeweils geschlossen sind
h) Öffnen der Heizpresse (1) und Entladen des fertig vulkanisierten Reifens und zur Vulkanisierung jedes weiteren Reifens Wiederholung der Schritte a) - h).

12. Verfahren zur Vulkanisation eines Fahrzeugluftreifens nach Anspruch 11, **dadurch gekennzeichnet, dass** man zur Erleichterung von Schritt h) vorher ein weiteres in den Hauben (4, 7) angeordnetes Ventil zum Brechen des Vakuums öffnet und anschließend wieder schließt.

## Claims

1. Heating press (1) for vulcanizing a vehicle tire under a vacuum,
- having a heating press upper part (3) and a heating press lower part (6), wherein the heating press upper part (3) has a hood upper part (4) mounted thereon and a container (2), which contains mold parts (16, 18, 21) of a vulcanizing mold, in this hood upper part (4), wherein the hood upper part (4) has a first circular ring (23), which is arranged fixedly on the heating press upper part (3), and a second circular ring (24), which adjoins this first circular ring coaxially in an axial direction and can be telescopically retracted and extended out over the first circular ring (23) in an axial direction P1,
- wherein the heating press upper part (3) and the heating press lower part (6) are connected to the container (2) such that, when the heating press upper part (3) is being lowered through a total stroke (GH) that takes place in an axial direction (P1), during which total stroke the open end of the hood upper part (4) moves onto the heating press lower part (6), the mold parts (14, 16, 17, 18, 21) of the vulcanizing mold can be closed in the radial direction (P2),
- wherein vacuum-tight seals (5, 9) are arranged between the two circular rings (23, 24) and between the second circular ring (24) and the heating press lower part (6),
- wherein the total stroke (GH) can be traveled in a manner composed of a first partial stroke (TH₁) and a second partial stroke (TH2),
- wherein, after the first partial stroke (TH₁), the hood upper part (3) can be moved in such a way that it rests on the heating press lower part (6) by way of the extended second circular ring (24), and the interior space of the hood (12) can be closed in a vacuum-tight manner by the seals (5, 9) although the vulcanizing mold is still open in an air-permeable manner and
- wherein a pump (10) and a vacuum tank (11), by means of which a vacuum can be generated in the interior space of the hood (12) after the first partial stroke (TH₁), are provided, wherein the vacuum tank (11) and the pump (10) are connected to the interior space (12) of the hood (4, 7, 31), and wherein the vacuum tank (11) and the pump (10) are connected to one another, and
- wherein, after the second partial stroke (TH₂), the hood upper part (3) can be moved in such a way that the second circular ring (24) can be retracted out further over the first circular ring (23) and the vulcanizing mold can be completely closed under vacuum conditions in the interior space of the hood (12).

2. Heating press (1) according to Claim 1, **characterized in that** a hydraulic, pneumatic or electric actuator (26), which can move the second circular ring (24) of the hood upper part (3) in an axial direction (P1), is provided.

3. Heating press (1) according to Claim 1 or 2, **characterized in that** a hood lower part (7) in the form of a third circular ring is arranged on the heating press lower part (6), wherein the first circular ring (23) of the hood upper part (3) and the third circular ring of the hood lower part (7) have the same inside diameter and the same outside diameter and are arranged in line with one another in the heating press (1).

4. Heating press (1) according to one or more of the preceding claims, **characterized in that** the seals are ring seals (5, 9), and at least one ring seal (9) is arranged in the lower region of the hood upper part (4) and at least one further ring seal (9) is arranged in the upper region of the hood lower part (7).

5. Heating press (1) according to Claim 4, **characterized in that** the ring seals (5, 9) are arranged in circular-ring-shaped grooves (25), wherein the diameter of the ring seals (5, 9) is slightly greater than the depth of the grooves (25).

6. Heating press (1) according to Claim 4 or 5, **characterized in that** the ring seals (5, 9) consist of solid material.

7. Heating press (1) according to Claim 4 or 5, **characterized in that** the ring seals (5, 9) are hoses of variable diameter.

8. Heating press (1) according to one or more of Claims 4 to 7, **characterized in that** the ring seals (5, 9) are differentially inflated double ring seals.

9. Heating press (1) according to one or more of the preceding claims, **characterized in that** sliding bands composed of wear-resistant high-temperature polymer, for example of **PEEK,** are arranged in the hood parts (4, 7) in the region above and/or below the ring seals (9).

10. Heating press (1) according to one or more of the preceding claims, **characterized in that** the vacuum tank (11) has a volume that is approximately 5 to 10 times greater than the volume of the closed hoods (4, 7).

11. Method for vulcanizing a pneumatic vehicle tire under a vacuum in a heating press (1) according to one or more of Claims 1 to 10, **characterized in that** the following steps are performed in succession:
a) loading the open heating press (1) by inserting the green tire for vulcanization into the container (2), wherein the second circular ring (24) of the hood upper part (4) is retracted out over the first circular ring (23),
b) moving the heating press upper part (3) through the first partial stroke (TH₁), extending the second circular ring (24) toward the heating press lower part (6) until it rests on the heating press lower part (6), in order to obtain a closed hood interior space (12), while the vulcanizing mold is only closed to some extent,
c) only if the ring seals (5, 9) are a hose of variable diameter: inflating the circular-ring-shaped hose seal in order to seal off the hood interior space (12) in a vacuum-tight manner,
d) opening the connection between the vacuum tank (11) and the hood interior space (12) in order to generate a partial vacuum, by way of pressure equalization between the vacuum tank (11) and the hood interior space (12), in the hood interior space (12) that has been closed in a vacuum-tight manner,
e) when the partial vacuum is obtained in the hood interior space (12): closing the connection between the vacuum tank (11) and the hood interior space (12), opening the connection between the hood interior space (12) and the pump (10), and pumping the remaining air out of the hood interior space (12) in order to generate the vacuum,
f) moving the heating press upper part (3) through the second partial stroke (TH₂), during which the second circular ring (24) is retracted out over the first circular ring (23), with the result that the vulcanizing mold is completely closed, and subsequently closing the connection between the hood interior space (12) and the pump (10),
g) vulcanizing the green tire and opening the connection between the pump (10) and the vacuum tank (11) and generating a vacuum in the vacuum tank (11), wherein the connection of the pump (10) to the hood interior space (12) and the connection of the vacuum tank (11) to the hood interior space (12) are each closed,
h) opening the heating press (1) and unloading the fully vulcanized tire,
and repeating the steps a) - h) in order to vulcanize each further tire.

12. Method for vulcanizing a pneumatic vehicle tire according to Claim 11, **characterized in that**, to facilitate step h), this is preceded by opening a further valve arranged in the hoods (4, 7) in order to deplete the vacuum and subsequently closing it again.

## Revendications

1. Presse chauffante (1) destinée à vulcaniser un pneumatique de véhicule sous vide
- ladite presse chauffante comprenant une partie de presse chauffante supérieure (3) et une partie de presse chauffante inférieure (6), la partie de presse chauffante supérieure (3) comportant une partie de capot supérieure (4) montée sur celle-ci et dans cette partie de capot supérieure (4) un récipient (2) contenant des parties de moule (16, 18, 21) d'un moule de vulcanisation, la partie de capot supérieure (4) comportant un premier anneau circulaire (23) qui est disposé de manière fixe sur la partie de presse chauffante supérieure (3) et un deuxième anneau circulaire (24) qui est extensible et rétractable de manière télescopique vers l'extérieur dans la direction axiale P1 sur le premier anneau circulaire (23) et qui est relié coaxialement à ce premier anneau circulaire dans la direction axiale et,
- la partie de presse chauffante supérieure (3) et la partie de presse chauffante inférieure (6) étant reliées au récipient (2) de manière à ce que, lorsque la partie de presse chauffante supérieure (3) est abaissée sur une course totale (GH) qui est effectuée dans la direction axiale (P1) et lors de laquelle l'extrémité ouverte de la partie de capot supérieure (4) se déplace jusque sur la partie de presse chauffante inférieure (6), les parties de moule (14, 16, 17, 18, 21) du moule de vulcanisation puissent être fermées dans la direction radiale (P2),
- des joints (5, 9) étanches au vide étant disposés entre les deux anneaux circulaires (23, 24) et entre le deuxième anneau circulaire (24) et la partie de presse chauffante inférieure (6),
- la course totale (GH) pouvant être constituée d'une première partie de course (TH₁) et d'une deuxième partie de course (TH2),
- après la première partie de course (TH₁), la partie de capot supérieure (3) pouvant être déplacée de manière à reposer avec le deuxième anneau circulaire étendu (24) sur la partie de presse chauffante inférieure (6) et l'espace intérieur du capot (12) pouvant être fermé de manière étanche au vide par les joints (5, 9), tandis que le moule de vulcanisation est encore ouvert de manière perméable à l'air et
- une pompe (10) et un réservoir à vide (11) étant prévus, au moyen desquels un vide peut être généré dans l'espace intérieur du capot (12) après la première partie de course (TH₁), le réservoir à vide (11) et la pompe (10) étant reliés à l'espace intérieur (12) du capot (4, 7, 31) et le réservoir à vide (11) et la pompe (10) étant reliés l'un à l'autre et
- après la deuxième partie de course (TH₂), la partie de capot supérieure (3) pouvant être déplacée de manière à ce que le deuxième anneau circulaire (24) puisse être rétracté à l'extérieur davantage sur le premier anneau circulaire (23) et que le moule de vulcanisation puisse être complètement fermé dans des conditions de vide dans l'espace intérieur du capot (12).

2. Presse chauffante (1) selon la revendication 1, **caractérisée en ce qu'**un actionneur hydraulique, pneumatique ou électrique (26) est prévu, au moyen duquel le deuxième anneau circulaire (24) de la partie de capot supérieure (3) peut être déplacé dans la direction axiale (P1).

3. Presse chauffante (1) selon la revendication 1 ou 2, **caractérisée en ce qu'**une partie de capot inférieure (7) est disposée en forme de troisième anneau circulaire sur la partie de presse chauffante inférieure (6), le premier anneau circulaire (23) de la partie de capot supérieure (3) et le troisième anneau circulaire de la partie de capot inférieure (7) ayant même diamètre intérieur et le même diamètre extérieur et étant disposés en alignement l'un avec l'autre dans la presse chauffante (1).

4. Presse chauffante (1) selon une ou plusieurs des revendications précédentes, **caractérisée en ce que** les joints sont des joints annulaires (5, 9) et au moins un joint annulaire (9) étant disposé dans la région inférieure de la partie de capot supérieure (4) et au moins un autre joint annulaire (9) étant disposé dans la région supérieure de la partie de capot inférieure (7).

5. Presse chauffante (1) selon la revendication 4, **caractérisée en ce que** les joints annulaires (5, 9) sont disposés dans des rainures annulaires (25), le diamètre des joints annulaires (5, 9) étant légèrement supérieur à la profondeur des rainures (25).

6. Presse chauffante (1) selon la revendication 4 ou 5, **caractérisée en ce que** le joint annulaire (5, 9) est en un matériau plein.

7. Presse chauffante (1) selon la revendication 4 ou 5, **caractérisée en ce que** les joints annulaires (5, 9) sont des tuyaux dont le diamètre peut être modifié.

8. Presse chauffante (1) selon une ou plusieurs des revendications 4 à 7, **caractérisée en ce que** les joints annulaires (5, 9) sont des joints annulaires doubles à pompage différentiel.

9. Presse chauffante (1) selon une ou plusieurs des revendications précédentes, **caractérisée en ce que**, dans la région située au-dessus et/ou au-dessous des joints annulaires (9), des bandes de glissement en polymère à haute température résistant à l'abrasion, comme par exemple du PEEK, sont disposées dans les parties de capot (4, 7).

10. Presse chauffante (1) selon une ou plusieurs des revendications précédentes, **caractérisée en ce que** le réservoir à vide (11) a un volume qui est environ 5 à 10 fois plus grand que le volume des capots fermés (4, 7).

11. Procédé de vulcanisation d'un pneumatique de véhicule sous vide dans une presse chauffante (1) selon une ou plusieurs des revendications 1 à 10, **caractérisé en ce que** les étapes suivantes sont réalisées successivement :
a) charger la presse chauffante ouverte (1) par insertion du pneumatique vert à vulcaniser dans le récipient (2), le deuxième anneau circulaire (24) de la partie de capot supérieure (4) étant rétracté à l'extérieur sur le premier anneau circulaire (23),
b) déplacer la partie de presse chauffante supérieure (3) sur la première partie de course (TH₁), par extraction du deuxième anneau circulaire (24) en direction de la partie de presse chauffante inférieure (6) jusqu'à ce que celle-ci repose sur la partie de presse chauffante inférieure (6) afin de créer un espace de capot intérieur fermé (12) alors que le moule de vulcanisation n'est que partiellement fermé,
c) uniquement dans le cas où les joints annulaires (5, 9) sont un tuyau dont le diamètre peut être modifié : gonfler le joint de tuyau annulaire afin de rendre étanche au vide l'espace de capot intérieur (12),
d) ouvrir la liaison entre le réservoir à vide (11) et l'espace de capot intérieur (12) afin de générer un vide partiel dans l'espace de capot intérieur (12) fermé de manière étanche au vide par égalisation de la pression entre le réservoir à vide (11) et l'espace de capot intérieur (12),
e) lorsque le vide partiel dans l'espace de capot intérieur (12) est obtenu : fermer la liaison entre le réservoir à vide (11) et l'espace de capot intérieur (12), ouvrir la liaison entre l'espace de capot intérieur (12) et la pompe (10) et pomper l'air restant de l'espace de capot intérieur (12) afin de générer le vide,
f) déplacer la partie de presse chauffante supérieure (3) sur la deuxième partie de course (TH₂) lors de laquelle le deuxième anneau circulaire (24) est rétracté à l'extérieur sur le premier anneau circulaire (23) de sorte que le moule de vulcanisation soit complètement fermé puis fermer la liaison entre l'espace de capot intérieur (12) et la pompe (10),
g) vulcaniser le pneumatique vert et ouvrir la liaison entre la pompe (10) et le réservoir à vide (11) et générer un vide dans le réservoir à vide (11), la liaison entre la pompe (10) et l'espace de capot intérieur (12) et la liaison entre le réservoir à vide (11) et l'espace de capot intérieur (12) étant chacune fermées,
h) ouvrir la presse chauffante (1) et retirer le pneumatique entièrement vulcanisé et répéter les étapes a) à h) pour vulcaniser chaque pneumatique suivant.

12. Procédé de vulcanisation d'un pneumatique de véhicule selon la revendication 11, **caractérisé en ce que**, pour faciliter l'étape h), une autre valve disposée dans les capots (4, 7) est préalablement ouverte pour rompre le vide, puis refermée.
